# EUROPEAN PATENT APPLICATION

(11) **EP 3 845 289 A1**
(43) Date of publication of application: **07.07.2021**
(21) Application number: 19220240.6
(22) Date of filing: 31.12.2019
(51) Int. Cl.: B01D 53/06, B64D 13/06

(54) **AIRCRAFT ENVIRONMENTAL CONTROL SYSTEM**

(71) Applicant: Hamilton Sundstrand Corporation, Charlotte, NC 28217 (US)
(72) Inventor: ZHU, Yonghua, Cork City, T23 XN53 (IE); THIBAUD, Catherine, South Windsor, CT Connecticut 06074 (US)
(74) Representative: Dehns

(57) **Abstract**

An aircraft environmental control system, comprising means for mixing and conditioning bleed air from a bleed air input and recirculation air (2) from an aircraft interior to provide mixed, conditioned air to the aircraft interior, the system further comprising one or more rotating wheels (7, 8, 9) arranged in a path of at least part of the recirculation air, prior to the means for mixing and conditioning, the one or more wheels configured to remove one or more contaminants and/or moisture from the recirculation air before mixing and conditioning.

## Description

### TECHNICAL FIELD

The present disclosure is concerned with environmental control systems for aircraft which provide pressurised and conditioned air to the aircraft cabin for the health and comfort of passengers and crew.

### BACKGROUND

Environmental control systems (ECS) are provided in aircraft to provide pressurised and conditioned air to the aircraft cabin. Regulations provide for the minimum flow of conditioned air to be fed into the cabin per passenger. The Federal Aviation Authority (FAA) requires that fresh air flow rate to be at least 0.25kg/min per passenger in order to dilute contaminants generated in the cabin, to provide thermal comfort and oxygen for occupants and to maintain cabin pressure. An ECS must be able to comply with such regulations while maximising efficiency in terms of power consumption but also minimizing overall size and weight of the ECS.

Generally, particularly in commercial aircraft, fresh air from the aircraft engine (bleed air) or compressed ambient air is used to provide the ECS air flow. The incoming air is, however, at a relatively high temperature and pressure and needs to be conditioned to the appropriate temperature and pressure before it is fed into the cabin. The way this is usually done is to use ambient air, brought into the system via an air intake device, such as a scoop. This air - so-called RAM air - is used in a system of heat exchangers to cool the bleed air or compressed ambient air. The RAM air is firstly used in a main heat exchanger (MHX) as a heat sink to cool the bleed air or compressed ambient air and then in a primary heat exchanger (PHX). By the time the RAM air has passed through the MHX, its temperature has already increased substantially. The ECS of an aircraft consumes the majority of the non-propulsive power. Much of this energy is consumed in extracting and conditioning the bleed air. In order to save fuel consumption, systems have been developed that use a combination of bleed air and recirculation conditioned air from the aircraft cabin. This makes use of the energy that went into conditioning the air when it was supplied to the cabin from the exhausted air. A mix of bleed air and already conditioned, exhausted air therefore reduces fuel consumption as less fresh air needs to be conditioned in generating new conditioned air to be supplied to the cabin. A 50:50 mix of bleed air and recirculated air is generally used. There is a desire to further reduce the proportion of fresh (or bleed) air and use more recirculation air, to further reduce fuel consumption.

If more recirculation air is used in the air being supplied to the cabin in an ECS, it is important that contaminants, e.g. CO₂ / volatile organic compounds (VOCs), are removed from the recirculated air. It is also important to control humidity levels in the aircraft cabin.

There is great pressure on the aircraft industry to improve energy efficiency and to reduce emissions and there is, therefore, a need for a more energy efficient ECS. It would be desirable to reduce the amount of bleed air required by the ECS, and make more use of recirculation air taking into account the need to control contamination and humidity.

### SUMMARY

According to one aspect, there is provided an aircraft environmental control system, comprising means for mixing and conditioning bleed air from a bleed air input and recirculation air from an aircraft interior to provide mixed, conditioned air to the aircraft interior, the system further comprising one or more rotating wheels arranged in a path of at least part of the recirculating air, prior to the means for mixing and conditioning, the one or more wheels configured to remove one or more contaminants and/or moisture from the recirculation air before mixing and conditioning.

In a preferred arrangement, the system further comprises means for passing air processed from clean (low contamination) and dry air (e.g. ram air) through the wheels to desorb the one or more contaminants for purging from the system. This is a regenerative feature using clean air to regenerate the contaminant removing wheels for further adsorption of contaminants. The exhaust air from the aircraft is preferably expanded e.g. by a turbine, to drive the compressor to compress the clean air, before being passed through the wheels and heaters may be provided to warm or cool the air.

The system may comprise wheels for removing different types of contaminants. One of the wheels may be for removing moisture.

Valves may be provided to allow some or all of the recirculation air to bypass some or all of the wheels. In one example, a valve is provided to bypass all of the wheels and a further valve is provided to bypass only a moisture removing wheel.

A method of providing conditioned air to an aircraft interior is also provided, comprising mixing and conditioning bleed air and recirculation air from the aircraft to provide mixed conditioned air to the aircraft interior, the method including removing one or more contaminants from the recirculation air, prior to mixing, by passing the recirculation air through one or more, rotating, contamination removing wheels.

Further, the method may include regenerating the contaminant removing material of the one or more wheels by passing air exhausted from the aircraft through the wheels to desorb the contaminant adsorbed by the wheels.

### BRIEF DESCRIPTION OF THE DRAWINGS

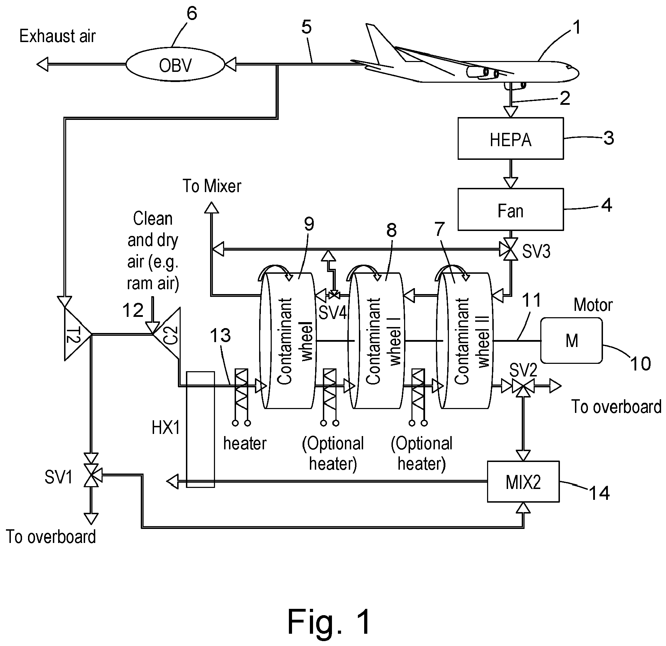

Fig. 1 is a schematic view of an environmental control system according to the disclosure.

### DETAILED DESCRIPTION

Fig. 1 shows an embodiment of an ECS according to the disclosure. It is envisaged that other configurations could fall within the scope of the invention as defined by the claims.

ECS are known that combine recirculation air and conditioned bleed air to supply conditioned air to an aircraft cabin. These will not, therefore, be described in detail and the details of such systems are not shown in the drawing.

Fig. 1 shows an aircraft. Conditioned air is provided to interior regions of the aircraft e.g. the passenger cabin, the cockpit and/or cargo areas etc. from an environmental control system (ECS). Bleed air and some recirculation air (i.e. conditioned air recirculated from the aircraft) are mixed in a mixer (not shown - 'To Mixer') and conditioned using a known arrangement of valves and heat exchangers to provide suitably conditioned air to the aircraft interior. The recirculated air 2 is generally filtered (at HEPA3) and conveyed to the mixer via a fan 4. Conditioned air from the aircraft that is not recirculated is exhausted 5 overboard from the aircraft, e.g. via an overboard valve (OBV) 6. As mentioned above, in conventional systems, recirculated air and fresh (bleed) air will be mixed in equal proportions.

According to this disclosure, to allow more recirculated air to be used in the ECS mix (and, therefore, less fresh air) the recirculation air 2 exiting the aircraft, or a portion of it, is passed through one or more rotating wheels 7, 8, 9 arranged to remove contaminants and/or humidity from the air before it is mixed in the ECS. As the wheel/wheels rotate, they will remove contaminants and/or moisture from the air and the purified air is then provided to the mixer (as before). A split valve (SV3) can be controlled to regulate the amount of recirculation air passing through the wheel(s) 7, 8, 9. Whilst all of the air may be passed through the wheel(s), it is preferable that some of the air bypasses the wheel(s) and goes straight to the mixer in case the wheels fail. In some conditions, e.g. where there are fewer passengers in the cabin, the wheels can be bypassed completely.

Each wheel preferably comprises two sections; a first section for adsorbing the contaminant and a second, regeneration, section for desorbing the contaminant to ambient. The wheels are driven by an electric motor 10 via a shaft 11 on which the wheel(s) is/are mounted. The wheels can be arranged to be rotated at different speeds by incorporating gearboxes (not shown). The example shown includes three wheels - first, 7, and second 8, contaminant wheels and a humidity wheel 9. Different numbers of wheels may be used. The composition of the wheels can be selected to remove different contaminants for example, but not limited to, CO₂ or VOC.

In the example shown, a split valve SV4 is provided to allow air to bypass the humidity wheel 9, as in some situations, it may be desirable to retain some moisture in the recirculated air.

In addition to the contaminant removal feature provided by the wheel, the system of the present disclosure may also incorporate regenerative features as described further below. This enables air from the system to be used to desorb the contaminants collected by the wheel(s) to the atmosphere, to regenerate the wheel adsorbing materials.

In the regenerative operation, air 5 exhausted from the aircraft is expanded by a turbine T2 generating power to drive a compressor C2. Expansion of the air causes its temperature to decrease. The suction air flow of the compressor C2 can come from the wheel 7, 8, 9 or from ram air, as described further below. The pressure of the regeneration air from the compressor C2 should be comparable to the mainstream processing air to avoid leakage.

The regenerative operation of the system has two modes of operation.

In a first mode, RAM air 12, or air from another 'fresh air' source of clean, dry air, is used to generate regeneration flow at the compressor C2. The pressure of this air should be increased to be close to that of the processing air, to avoid leakage. It may be that the temperature of this air is then too high for regeneration, in which case some of the expanded air at the turbine T2 can be diverted, via a split valve SV1, to be used as cooling air in a heat exchanger HX1, to cool the temperature of the air at the compressor C2. The cooled regeneration air 13 then passes through the wheels 9, 8, 7 and is then purged overboard (e.g. regulated by a further split valve SV2.

In a second mode, a proportion of the 'processed' recirculation air (after passing through the wheels) is used for the regeneration. In this mode, the compressor C2 is only operative to slightly increase the pressure of the regeneration air to compensate for any drop in pressure along the flow path. In this mode, the air from the compressor C2 is, this time, warmed by the heat exchanger HX1 by purge air provided to the heat exchanger from the split valve SV2 and a mixer 14. A heater may be provided before one or more of the wheels to further heat the air to optimise the regeneration temperature. In the second mode, all of the expanded air from the turbine T2 will be purged overboard via split valve SV1 as it is not used to cool the temperature of air after C2.

Ideally, the wheel having the lowest regeneration temperature would be placed first in the regeneration air path. Optimised energy and contaminant removal properties can, in this way, be optimised for different substances.

The wheels can have different sizes and weights and the wheels can be placed in different orders.

Using such an arrangement, fuel savings can be achieved due to less fresh (or bleed) air being used in the ECS. Further, the humidity in the aircraft can be controlled even though more recirculation air is being used. Although the wheels add to the weight of the system and have to be drive, thus having an associated energy or fuel penalty, this is offset by energy recovery from exhaust air. The system is compact in that it makes multiple use of the same air stream. The system can be designed to handle various contaminants according to the conditions.

## Claims

1. An aircraft environmental control system, comprising means for mixing and conditioning bleed air from a bleed air input and recirculation air from an aircraft interior to provide mixed, conditioned air to the aircraft interior, the system further comprising one or more rotating wheels (7, 8, 9) arranged in a path of at least part of the recirculation air (2), prior to the means for mixing and conditioning, the one or more wheels configured to remove one or more contaminants and/or moisture from the recirculation air before mixing and conditioning.

2. The aircraft environmental control system of claim 1, further comprising means for passing air processed from air exhausted from the aircraft through the wheels to desorb the one or more contaminants for purging from the system.

3. The aircraft environmental control system of claim 2, wherein the means for passing air through the wheels to desorb comprises means for cooling and compressing clean and dry air before it is passed through the wheel(s).

4. The aircraft environmental control system of claim 3, wherein the means for cooling and compressing comprises a turbine (T2) and a compressor (C2).

5. The aircraft environmental control system of claim 4, whereby the turbine expands exhaust air from the aircraft to drive the compressor to compress the clean and dry air.

6. The aircraft environmental control system of claim 3, 4 or 5, further comprising a heat exchanger (HX1) for cooling or warming compressed clean and dry air before it is passed through the wheel(s).

7. The aircraft environmental control system of claims 3 to 5, wherein the clean and dry air is RAM air.

8. The aircraft environmental control system of claims 3 to 5, wherein the clean and dry air comprises recirculation air that has passed through the wheels.

9. The aircraft environmental control system of claims 3 to 8, wherein a heater is provided before one or more of the wheels to heat air passing through the wheels to desorb.

10. The aircraft environmental control system of any preceding claim, further comprising a valve for guiding recirculation air to bypass one or more of the wheels.

11. The aircraft environmental control system of any preceding claim, wherein the one or more wheels includes a wheel for removing gaseous and/or particulate contaminant.

12. The aircraft environmental control system of any preceding claim, wherein the one or more wheels includes a wheel for removing moisture from the recirculation air.

13. A method of providing conditioned air to an aircraft interior comprising mixing and conditioning bleed air and recirculation air from the aircraft to provide mixed conditioned air to the aircraft interior, the method including removing one or more contaminants from the recirculation air, prior to mixing, by passing the recirculation air through one or more rotating, contamination removing wheels.

14. The method of claim 13, further including regenerating contaminant removing material of the one or more wheels by passing compressed clean and dry air through the wheels to desorb the contaminant adsorbed by the wheels.

15. The method of claim 13, further comprising cooling and compressing the clean and dry air before passing through the wheels, and optionally whereby exhaust air from the aircraft is expanded by a turbine to drive a compressor to compress the clean and dry air.
